# EUROPEAN PATENT SPECIFICATION

(11) **EP 2 920 276 B1**
(45) Date of publication and mention of the grant of the patent: **18.07.2018**
(21) Application number: 13824220.1
(22) Date of filing: 15.10.2013
(51) Int. Cl.: C10L 1/02

(54) **USE OF BIODISTILLATE FUELS CONTAINING TALLOW ESTERS HAVING LOW METAL UPTAKE**
VERWENDUNG VON BIOTREIBSTOFFEN ENTHALTEND TALGFETTSÄUREESTER MIT NIEDRIGER METALLAUFNAHME TENDENZ
UTILISATION DES BIO-CARBURANTS COMPRENANT DES ESTERS À BASE DE SUIF AYANT UNE FAIBLE TENDANCE D'ABSORBER DES MÉTAUX

(30) Priority: 16.11.2012 US 201261727205 P
(43) Date of publication of application: 23.09.2015
(73) Proprietor: ExxonMobil Research and Engineering Company, Annandale, NJ 08801-0900 (US)
(72) Inventor: WELLS, Paul, P., Mullica Hill, NJ 08062 (US); WRIGLEY, Krystal, B., Turnersville, NJ 08012 (US)
(74) Representative: ExxonMobil Chemical Europe Inc.
(86) International application number: PCT/US2013/065057
(87) International publication number: WO 2014/078000

(56) References cited:
- EP-A1- 1 674 553
- US-A1- 2011 138 679
- FAZAL M A ET AL: "Comparative corrosive characteristics of petroleum diesel and palm biodiesel for automotive materials", FUEL PROCESSING TECHNOLOGY, ELSEVIER BV, NL, vol. 91, no. 10, 1 October 2010 (2010-10-01), pages 1308-1315, XP027147934, ISSN: 0378-3820 [retrieved on 2010-05-26]
- HASEEB A S M A ET AL: "Compatibility of automotive materials in biodiesel: A review", FUEL, IPC SCIENCE AND TECHNOLOGY PRESS, GUILDFORD, GB, vol. 90, no. 3, 22 October 2010 (2010-10-22), pages 922-931, XP028147312, ISSN: 0016-2361, DOI: 10.1016/J.FUEL.2010.10.042 [retrieved on 2010-10-27]
- TEIXEIRA L S G ET AL: "Characterization of beef tallow biodiesel and their mixtures with soybean biodiesel and mineral diesel fuel", BIOMASS AND BIOENERGY, PERGAMON, AMSTERDAM, NL, vol. 34, no. 4, 1 April 2010 (2010-04-01), pages 438-441, XP026947075, ISSN: 0961-9534, DOI: 10.1016/J.BIOMBIOE.2009.12.007 [retrieved on 2009-12-31]

## Description

### FIELD OF THE INVENTION

The invention relates to improving (reducing) uptake of metals, particularly copper and/or zinc, by renewable fuel components/compositions. In particular, the renewable fuel component/composition can include a tallow ester.

### BACKGROUND OF THE INVENTION

Biodiesel is the name for a variety of ester-based oxygenated fuels made from vegetable oils, fats, greases, or other sources of triglycerides. Biodiesel is a nontoxic and biodegradable blendstock which may be blended with petroleum diesel provided relevant specifications are met. Biodiesel has been designated as an alternative fuel by the United States Department of Energy and the United States Department of Transportation, and is registered with the United States Environmental Protection Agency as a fuel and fuel additive.

Because biodiesel is made from numerous different feedstocks (e.g., rapeseed oil and palm oil), including mixed feedstocks, a finished fuel manufacturer is often not aware of the exact feedstock composition of a purchased biodiesel. Biodiesel is commonly referred to by its feedstock source (e.g., rapeseed methyl ester, palm oil methyl ester). Since the performance of a biodiesel depends upon the particular feedstock mixture from which it was produced, formulators are therefore often unable to predict how the biodiesel will perform in the finished fuel blend. For example, in the absence of accurate feedstock information, it can prove difficult to anticipate whether any given biodiesel will afford a performance advantage such as an improved cetane number, or will in fact suffer from a performance disadvantage (such as poor low-temperature operability) that might call for the addition of a performance enhancer.

Lack of a reliable biodiesel compositional profile also complicates fuel formulators' efforts to design biodiesel blends that satisfy applicable regulatory standards such as ASTM D975, ASTM D7467 Standard Specification for Diesel Fuel Oil, Biodiesel Blend (B6 - B20), and EN590. The performance criteria and characteristics mandated by such standards are linked inextricably with a biodiesel's composition.

It is known that tallow esters can exhibit rather high acid numbers and relatively high uptake of metals, particularly copper and zinc. Indeed, European Publication No. EP 1674553, which centers on issues relating to inhibiting corrosion in engines, specifically teaches not to use tallow esters such as methyl tallow, but instead prefers methyl esters of rapeseed (RME), soybean (SME), palm (PME), and/or coconut (CME) oils. Furthermore, where tallow esters are used in the art, their use is typically limited to relatively small amounts. Please note U.S. Patent Application Publication No. 2011/0138679, which discloses blends of SME, TME, RME, and PME, but which seems to suggest the use of TME sparingly, if at all, by limiting the TME content in its blends to 25 vol% at most.

Accordingly, the opportunity exists for methods of attaining acceptably low metals (e.g., copper and/or zinc) uptake levels by unexpectedly using renewable components (e.g., of biodiesel compositions/blends) that contain a relatively large proportion of tallow esters, despite the relatively poor metals (e.g., copper and/or zinc) uptake properties of the pure tallow ester component themselves (e.g., an individual 24-hour metal uptake of 1 ppm or more for copper and/or zinc).

### SUMMARY OF THE INVENTION

One aspect of the invention relates to the use of at least one of soybean oil methyl ester (SME) feed and palm oil methyl ester (PME) feed for reducing the uptake of zinc and copper metals in a renewable component of a distillate boiling range fuel composition comprising: providing the renewable component comprising blending a tallow C₁-C₄ alkyl ester feed and from 5 to 65 vol% of soybean oil methyl ester (SME) feed and/or from 5 to 65 vol% of palm oil methyl ester (PME) feed, such that the tallow C₁-C₄ alkyl ester feed comprises from 35 vol% to 90 vol% of the renewable component.

### BRIEF DESCRIPTION OF THE DRAWINGS

Figure 1 graphically shows copper content before and after mixing and acid number of individual (single) components of a fuel composition.
Figure 2 graphically shows zinc content before and after mixing and acid number of individual (single) components of a fuel composition.
Figure 3 graphically shows copper content before and after mixing and acid number of individual (single) components of a fuel composition, as well as copper content of several binary renewable blends, again, before and after mixing.
Figure 4 graphically shows zinc content before and after mixing and acid number of individual (single) components of a fuel composition, as well as zinc content of several binary renewable blends, again, before and after mixing.

### DETAILED DESCRIPTION OF THE EMBODIMENTS

One aspect of the invention relates to attaining acceptably low uptake of metals, particularly zinc and copper, in a renewable component of a fuel composition such as a distillate boiling range fuel, like a biodiesel. One reason to focus on zinc and copper metals is that they can be particularly troublesome in vehicle engines (such as compression ignition, or diesel, engines), where zinc and copper can cause injector deposits and oxidative stability issues, even at relatively low levels. Though these metal levels can stay typically low in non-renewable (*e.g*., petroleum-based) fuels such as those boiling in the distillate range, even upon exposure to source of the zinc and copper metals, several renewable fuels can extract such metals from their environment and/or from their container at relatively high levels that can cause fouling problems.

Even relatively low concentrations of copper and zinc, however, are known to negatively impact diesel fuel oxidative stability and increase injector deposits in compression ignition engines. Zinc presence as low as 1 ppm can cause noticeable fouling to injectors, impacting the fuel spray pattern in an internal combustion engine. For example, a DW10 engine test that utilizes fuel containing 1 ppm zinc can relatively quickly and quite reliably foul the fuel injectors. Copper is also well known as a catalyst for oxidation in both the fuel and lubricant. The presence of soluble metals in fuel can cause an increase in emissions, a decrease in fuel economy, corrosion, and/or loss of torque in a diesel engine. It can therefore be desirable for a fuel composition, such as a distillate boiling range composition, particularly containing a bio/renewable component, to attain an acceptably low (*e.g*., minimized) zinc and copper uptake, *e.g*., to maintain zinc and/or copper levels individually at less than 1 ppm.

Thus, one aspect of the invention relates to the use of at least one of soybean oil methyl ester (SME) feed and palm oil methyl ester (PME) feed for reducing the uptake of zinc and copper metals in a renewable component of a distillate boiling range fuel composition. The method comprises the steps of: providing the renewable component comprising blending a tallow C₁-C₄ alkyl ester feed and from 5 to 65 vol% of soybean oil methyl ester (SME) feed and/or from 5 to 65 vol% of palm oil methyl ester (PME) feed, such that the tallow C₁-C₄ alkyl ester feed comprises from 35 vol% to 90 vol% of the renewable component.

### Feedstocks

In the discussion below, a biocomponent or a renewable feed or component refers to a hydrocarbon feedstock derived from a biological/renewable raw material component, such as vegetable fats/oils, animal fats/oils, fish oils, pyrolysis oils, and algae lipids/oils, as well as components of such materials. In some embodiments, the biofeed can include one or more type of lipid-based compounds, which are typically biological compounds that are insoluble in water, but soluble in nonpolar (or fat) solvents. Non-limiting examples of such solvents include alcohols, ethers, chloroform, alkyl acetates, benzene, and combinations thereof.

Major classes of lipid-based compounds include, but are not necessarily limited to, fatty acids, glycerol-derived lipids (including fats, oils and phospholipids), sphingosine-derived lipids (including ceramides, cerebrosides, gangliosides, and sphingomyelins), steroids and their derivatives, terpenes and their derivatives, fat-soluble vitamins, certain aromatic compounds, and long-chain alcohols and waxes.

In living organisms, lipid-based compounds generally serve as the basis for cell membranes and as a form of fuel storage. Lipid-based compounds can also be found conjugated with proteins or carbohydrates, such as in the form of lipoproteins and lipopolysaccharides.

Examples of vegetable (plant) oils that can be used in accordance with this invention include, but are not limited to rapeseed (canola) oil, soybean oil, coconut oil, sunflower oil, palm oil, palm kernel oil, peanut oil, linseed oil, tall oil, corn oil, castor oil, jatropha oil, jojoba oil, olive oil, flaxseed oil, camelina oil, safflower oil, babassu oil, tallow oil, and rice bran oil.

Vegetable oils as referred to herein can also include processed vegetable (plant) oil material. Non-limiting examples of processed vegetable oil material include fatty acids and fatty acid alkyl esters. Alkyl esters typically include C₁-C₅ alkyl esters and can preferably include C₁-C₄ alkyl esters. One or more of methyl, ethyl, and propyl esters can be especially preferred.

Examples of animal fats that can be used in accordance with the invention include, but are not limited to, beef fat (tallow), hog fat (lard), turkey fat, fish fat/oil, and chicken fat. The animal fats can be obtained from any suitable source including restaurants and meat production facilities.

Animal fats as referred to herein also include processed animal fat material. Non-limiting examples of processed animal fat material include fatty acids and fatty acid alkyl esters. Alkyl esters typically include C₁-C₅ alkyl esters and can preferably include C₁-C₄ alkyl esters. One or more of methyl, ethyl, and propyl esters can be especially preferred.

Algae oils or lipids are typically contained in algae in the form of membrane components, storage products, and metabolites. Certain algal strains, particularly microalgae such as diatoms and cyanobacteria, contain proportionally high levels of lipid-based compounds. Algal sources for the algae oils can contain varying amounts, e.g., from 2 wt% to 40 wt% of lipid-based compounds, based on total weight of the biomass itself. Additionally or alternately, algae can be genetically modified to produce oils that are not lipid-based compounds, e.g., that contain oxygenated hydrocarbons, such as wax esters, fatty ketones, fatty aldehydes, fatty alcohols, and the like. Further additionally or alternately, algae can be genetically modified to produce non-oxygenated hydrocarbons. In such cases, due to the genetic modifications, the algae may indeed exhibit an increased content of oil material and/or such oil material may advantageously have a reduced oxygen content, compared to contents observable and/or attainable in conventional biomass.

Algal sources for algae oils can include, but are not limited to, unicellular and multicellular algae. Examples of such algae can include a rhodophyte, chlorophyte, heterokontophyte, tribophyte, glaucophyte, chlorarachniophyte, euglenoid, haptophyte, cryptomonad, dinoflagellum, phytoplankton, and the like, and combinations thereof. In one embodiment, algae can be of the classes Chlorophyceae and/or Haptophyta. Specific species can include, but are not limited to, *Neochloris oleoabundans*, *Scenedesmus dimorphus*, *Euglena gracilis, Phaeodactylum tricornutum, Pleurochrysis carterae, Prymnesium parvum, Tetraselmis chui,* and *Chlamydomonas reinhardtii.* Additional or alternate nonlimiting examples of algae can include, but are not limited to, *Achnanthes, Amphiprora*, *Amphora*, *Ankistrodesmus*, *Asteromonas, Boekelovia*, *Borodinella*, *Botryococcus, Bracteococcus, Chaetoceros, Carteria*, *Chlamydomonas, Chlorococcum, Chlorogonium, Chlorella, Chroomonas*, *Chrysosphaera*, *Cricosphaera*, *Crypthecodinium, Cryptomonas, Cyclotella*, *Dunaliella*, *Ellipsoidon, Emiliania*, *Eremosphaera*, *Ernodesmius*, *Euglena*, *Franceia*, *Fragilaria*, *Gloeothamnion, Haematococcus, Halocafeteria*, *Hymenomonas*, *Isochrysis, Lepocinclis, Micractinium, Monoraphidium, Nannochloris, Nannochloropsis, Navicula*, *Neochloris, Nephrochloris, Nephroselmis, Nitzschia*, *Ochromonas, Oedogonium, Oocystis, Ostreococcus, Pavlova*, *Parachlorella*, *Pascheria*, *Phaeodactylum, Phagus, Platymonas*, *Pleurochrysis*,, *Pleurococcus, Prototheca*, *Pseudochlorella*, *Pyramimonas*, *Pyrobotrys, Scenedesmus, Schizochytrium, Skeletonema*, *Spyrogyra*, *Stichococcus, Tetraselmis*, *Thraustochytrium*, *Viridiella*, and *Volvox* species.

Other examples of prokaryotic organisms (whether wild-type or genetically modified), which include cyanobacterial species, from which oils qualifying as algae oils herein can be isolated/derived can include, but are not limited to, one or more of the following species: *Agmenellum, Anabaena*, *Anabaenopsis*, *Anacystis, Aphanizomenon*, *Arthrospira*, *Asterocapsa*, *Borzia*, *Calothrix*, *Chamaesiphon, Chlorogloeopsis, Chroococcidiopsis, Chroococcus, Crinalium, Cyanobacterium, Cyanobium, Cyanocystis, Cyanospira*, *Cyanothece, Cylindrospermopsis, Cylindrospermum, Dactylococcopsis, Dermocarpella*, *Fischerella*, *Fremyella*, *Geitleria*, *Geitlerinema*, *Gloeobacter, Gloeocapsa*, *Gloeothece, Halospirulina*, *Iyengariella*, *Leptolyngbya*, *Limnothrix*, *Lyngbya*, *Microcoleus, Microcystis, Myxosarcina*, *Nodularia*, *Nostoc, Nostochopsis, Oscillatoria*, *Phormidium, Planktothrix*, *Pleurocapsa*, *Prochlorococcus, Prochloron, Prochlorothrix, Pseudanabaena*, *Rivularia*, *Schizothrix, Scytonema*, *Spirulina, Stanieria*, *Starria*, *Stigonema*, *Symploca*, *Synechococcus*, *Synechocystis, Tolypothrix, Trichodesmium, Tychonema*, and *Xenococcus.*

Other renewable component feeds usable in the present invention can include any of those which comprise primarily triglycerides and/or free fatty acids (FFAs). Free fatty acids can exist in acid form and/or in an at least partially ionic form where the hydrogen atom on the carboxylic acid group can be substituted by a carboxylate counterion, such as a soap-forming counterion (for example, including a counterion such as an ammonium ion, a mono-, di-, tri-, or tetra- alkyl ammonium ion, an alkaline earth metal ion, or a transition metal ion). The soap-forming counterion can include, but is not limited to, a multivalent counterion, such as a divalent counterion source; for example, the counterion can comprise magnesium, calcium, strontium, chromium, manganese, iron, cobalt, nickel, copper, zinc, aluminum, or a combination thereof. The triglycerides and/or FFAs can typically contain aliphatic hydrocarbon chains in their structure having from 8 to 36 carbons, for example from 10 to 26 carbons, from 12 to 24 carbons, or from 14 to 22 carbons. Types of triglycerides can be determined according to their fatty acid constituents. The fatty acid constituents can be readily determined using Gas Chromatography (GC) analysis. This analysis involves extracting the fat or oil, saponifying (hydrolyzing) the fat or oil, preparing an alkyl (*e.g*., C₁-C₅ or C₁-C₄, such as a methyl) ester of the saponified fat or oil, and determining the type of (methyl) ester using GC analysis. In one embodiment, a majority (*i.e*., greater than 50%) of the triglyceride present in the lipid-based material can be comprised of C₁₀ to C₂₆ fatty acid constituents, based on total triglyceride present in the lipid-based material. Further, a triglyceride is a molecule having a structure identical to the reaction product of glycerol and three fatty acids. Thus, although a triglyceride is described herein as being comprised of fatty acids, as mentioned herein, it should be understood that the fatty acid component does not necessarily contain a carboxylic acid hydrogen. In one embodiment, a majority of triglycerides present in the renewable component feed can be comprised of C₁₂ to C₁₈ fatty acid constituents, based on total triglyceride content. Other types of feed derived from biological raw material components can include fatty acid esters, such as fatty acid alkyl esters (*e.g*., FAME and/or FAEE), wax esters, fatty aldehydes, fatty alcohols, alkenes, alkanes, and combinations thereof.

In an embodiment, the feedstock can include at least about 5% by weight of glycerides, lipids, free fatty acids, fatty acid esters (such as fatty acid alkyl esters and/or wax esters), or a combination thereof. The glycerides can include monoglycerides, diglycerides, and/or triglycerides. In some embodiments, the feedstock can include at least about 5 wt%, for example at least about 10 wt% or at least 20 wt%, of glycerides, lipids, fatty acids, fatty acid esters, or a combination thereof. Additionally or alternately in those embodiments, the feedstock can include about 55 wt% or less, for example about 35 wt% or less, about 25 wt% or less, or about 20 wt% or less, of glycerides, lipids, fatty acids, fatty acid esters, or a combination thereof. For example, the feedstock can include glycerides and/or fatty acid esters, such as triglycerides, fatty acid methyl esters, or a combination thereof.

In an embodiment, the renewable component (such as the glycerides and/or fatty acid esters) can be a non-hydrotreated component. A non-hydrotreated feed can typically have an olefin content and an oxygen content similar to the content of the corresponding raw biocomponent material. Examples of suitable renewable component feeds can include food grade vegetable (plant) oils, and renewable component feeds that are refined, bleached, and/or deodorized.

Renewable component based diesel boiling range feeds can have a wide range of nitrogen and/or sulfur contents. For example, a renewable component feedstream based on a vegetable oil source can contain up to about 300 wppm nitrogen. In contrast, a biomass based feedstream containing whole or ruptured algae can sometimes include a higher nitrogen content. Depending on the type of algae, the nitrogen content of an algae based feedstream can be at least about 2 wt%, for example at least about 3 wt%, at least about 5 wt%, or at least about 10 wt%, and algae with still higher nitrogen contents are known. The sulfur content of a renewable component feed can also vary. In some embodiments, the sulfur content can be about 500 wppm or less, for example about 100 wppm or less, about 50 wppm or less, or about 10 wppm or less.

Aside from nitrogen and sulfur, oxygen can be another heteroatom component present in renewable component feeds. A renewable component diesel boiling range feedstream based on a vegetable (plant) oil, without hydrotreatment, can include as much as about 10 wt% oxygen, for example up to about 12 wt% or up to about 14 wt%. Additionally or alternately, such a renewable component diesel boiling range feedstream can include at least about 1 wt% oxygen, for example at least about 1.5 wt%, at least about 2 wt%, at least about 3 wt%, at least about 4 wt%, at least about 5 wt%, at least about 6 wt%, or at least about 8 wt%. Further additionally or alternately, a renewable component feed, without hydrotreatment, can include an olefin content of at least about 3 wt%, for example at least about 5 wt% or at least about 10 wt%.

Diesel boiling range feeds suitable for use in the present invention tend to boil within the range from 215°F (102°C) to 800°F (427°C). Preferably, the diesel boiling range feed can have an initial boiling point of at least 215°F (102°C), for example at least 250°F (121°C), at least 275°F (135°C), at least 300°F (149°C), at least 325°F (163°C), at least 350°F (177°C), at least 400°F (204°C), or at least 451°F (233°C). Additionally or alternately, the diesel boiling range feed can have a final boiling point of 800°F (427°C) or less, for example 775°F (413°C) or less or 750°F (399°C) or less. In some embodiments, the diesel boiling range feed can have a boiling range from 451°F (233°C) to 800°C (427°C). Additionally or alternately, the feed can be characterized by the boiling point required to boil a specified percentage of the feed. For example, the temperature required to boil at least 5 wt% of a feed is referred to as a "T5" boiling point and/or a 5 LV % point. In one embodiment, the feed can have a T5 boiling point of at least 230°F (110°C), for example at least 250°F (121°C) or at least 275°F (135°C). Further additionally or alternately, the feed can have a T95 boiling point of 775°F (418°C) or less, for example 750°F (399°C) or less or 725°F (385°C) or less. In another embodiment, the diesel boiling range feed can also include kerosene range compounds to provide a feed with a boiling range from 250°F ( 121°C) to 800°F (427°C).

A 100% biodiesel (B100) fuel compositions should meet ASTM D6751 and/or EN 14214 or EN14213 specifications.

If it is desired for the fuel composition to be a blend, the renewable component can be combined with a non-renewable component, such as a mineral hydrocarbon feed. A mineral hydrocarbon feed, as used herein, refers to a non-renewable component (e.g., conventional, petroleum-based) hydrocarbon feed, typically derived from crude oil and that has optionally been subjected to one or more separation and/or other refining processes. In one embodiment, when present, the mineral hydrocarbon feed can be a petroleum feed boiling in the diesel range or above. Examples of suitable feeds can include, but are not limited to, virgin distillates, hydrotreated virgin distillates, kerosene, diesel boiling range feeds (such as hydrotreated diesel boiling range feeds), light cycle oils, atmospheric gasoils, and the like, and combinations thereof.

Mineral feeds for blending with a renewable component feedstock can have a nitrogen content from about 50 wppm to about 2000 wppm nitrogen, for example from about 50 wppm to about 1500 wppm or from about 75 to about 1000 wppm and/or a sulfur content from about 100 wppm to about 10000 wppm sulfur, for example from about 200 wppm to about 5000 wppm or from about 350 wppm to about 2500 wppm. Additionally or alternately, the combined (renewable plus mineral component) feed can have a sulfur content of at least about 5 wppm, for example at least about 10 wppm, at least about 25 wppm, at least about 100 wppm, at least about 500 wppm, or at least about 1000 wppm. Further additionally or alternately, the combined feed can have a sulfur content of about 2000 wppm or less, for example about 1000 wppm or less, about 500 wppm or less, about 100 wppm or less, or about 50 wppm or less. Still further additionally or alternately, the nitrogen content of the combined feed can be about 1000 wppm or less, for example about 500 wppm or less, about 100 wppm or less, about 50 wppm or less, about 30 wppm or less, about 20 wppm or less, or about 10 wppm or less.

The content of certain compounds such as sulfur, nitrogen, oxygen, and olefins in a feedstock created by blending two or more feeds can typically be determined using a weighted average based on the blended feeds. For example, a renewable component feed and a non-renewable feed can be blended, for example, in a ratio of 80 wt% mineral feed and 20 wt% renewable component feed. If the mineral feed has a sulfur content of about 1000 wppm, and the renewable component feed has a sulfur content of about 10 wppm, the resulting blended feed could be expected to have a sulfur content of about 802 wppm.

In some alternative embodiments, a feed with a lower boiling range may be processed within a separate volume in a reactor, such as a naphtha boiling range feed and/or a kerosene boiling range feed. A naphtha feed can have an initial boiling point, or alternately a T5 boiling point, of at least 50°F (10°C) or at least 68°F (20°C). A naphtha feed can have a final boiling point, or alternately a T95 boiling point, of 450°F (232°C) or less, for example 400°F (204°C) or less or 350°F (177°C) or less. A kerosene feed can have an initial boiling point, or alternately a T5 boiling point, of at least 215°F (102°C), for example at least 250°F (121°C) or at least 300°F ( 149°C). Additionally or alternately, a kerosene feed can have a final boiling point, or alternately a T95 boiling point, of 575°F (302°C) or less, for example 550°F (288°C) or less, 500°F (260°C) or less, or 450°F (232°C) or less. Note that the above T5 and T95 boiling points for kerosene feeds could additionally or alternately apply to jet fuel feeds.

Although the relative proportions of the feed component(s) in the methods of the invention have been set forth herein, it should be understood that fuel compositions based thereon or made therefrom can optionally but in many cases include one or more fuel additives, such as fuel performance additives. It should be understood that

Non-limiting examples of types of performance additives can include one or more of cetane improvers, antioxidants, cold flow additives, cloud point depressants, biocides, conductivity improvers, corrosion inhibitors, metal deactivators, and engine cleaning agents. In some aspects, such additives are present in an amount which ranges from 0.001 to 7.0% by weight of the fuel composition.

A "cetane improver" can include, but is not limited to, 2-ethylhexyl nitrate (EHN) (e.g. HITEC® 4103, Ethyl Corp., Richmond, VA), cyclohexyl nitrate, di-tert-butyl peroxide, methyl nitrate, ethyl nitrate, n-propyl nitrate, isopropyl nitrate, allyl nitrate, n-butyl nitrate, isobutyl nitrate, sec-butyl nitrate, tert-butyl nitrate, n-amyl nitrate, isoamyl nitrate, 2-amyl nitrate, 3-amyl nitrate, tert-amyl nitrate, n-hexyl nitrate, 2-ethylhexyl nitrate, n-heptyl nitrate, sec-heptyl nitrate, n-octyl nitrate, sec-octyl nitrate, n-nonyl nitrate, n-decyl nitrate, n-dodecyl nitrate, cyclopentylnitrate, cyclohexylnitrate, methylcyclohexyl nitrate, isopropylcyclohexyl nitrate, the esters of alkoxy substituted aliphatic alcohols (such as 1-methoxypropyl-2-nitrate, 1-ethoxpropyl-2 nitrate, 1-isopropoxy-butyl nitrate, 1-ethoxylbutyl nitrate, and mixtures thereof), and mixtures or combinations thereof.

In some embodiments, the antioxidant additive may include an aromatic amine antioxidant (e.g., a phenylediamine-type antioxidant) such as N,N'-di-sec-butyl-p-phenylenediamine, 4-isopropylaminodiphenylamine, phenyl-naphthyl amine, ring-alkylated diphenylamines, and combinations thereof.

Additionally or alternately, the invention can include one or more of the following embodiments.
Embodiment 1. Use of at least one of soybean oil methyl ester (SME) feed and palm oil methyl ester (PME) feed for reducing the uptake of zinc and copper metals in a renewable component of a distillate boiling range fuel composition comprising: providing the renewable component comprising blending a tallow C1-C4 alkyl ester feed (such as a tallow methyl ester, or TME, feed) and from 5 to 65 vol% of soybean oil methyl ester, or SME, feed and/or from 5 to 65 vol% of palm oil methyl ester, or PME, feed, such that the tallow C1-C4 alkyl ester (e.g., TME) feed comprises from 35 vol% to 90 vol% of the renewable component.
Embodiment 2. The use of embodiment 1, wherein the renewable component comprises from 25 vol% to 60 vol% or from 40 vol% to 60 vol% of soybean oil methyl ester (SME), and/or wherein the renewable component comprises from 25 vol% to 60 vol% or from 40 vol% to 60 vol%) of palm oil methyl ester (PME).
Embodiment 3. The use of embodiment 1 or embodiment 2, wherein the renewable component comprises from 40 vol% to 75 vol% (e.g., from 40 vol% to 60 vol%) of tallow methyl ester (TME).
Embodiment 4. The use of any one of the previous embodiments, further comprising blending from 5 vol% to 25 vol% of the renewable component with from 60 vol% to 95 vol% of a diesel boiling range non-renewable component to attain a diesel fuel composition with acceptably low copper and/or zinc metal uptake characteristics.
Embodiment 5. The use of any one of embodiments 1-3, further comprising blending from 45 vol% to 85 vol% of the renewable component with from 15 vol% to 55 vol% of a diesel boiling range non-renewable component to attain a diesel fuel composition with acceptably low copper and/or zinc metal uptake characteristics.
Embodiment 6. The use of embodiment 4 or embodiment 5, wherein the diesel boiling range component exhibits at least two of the following characteristics: an initial boiling point of at least 215°F (102°C); a final boiling point of 800°F (427°C) or less; a T5 boiling point of at least 275°F (135°C); and a T95 boiling point of 775°F (418°C) or less.
Embodiment 7. The use of any one of embodiments 4-6, wherein the diesel boiling range component has boiling range from 451°F (233°C) to 800°C (427°C).
Embodiment 8. The use of any one of embodiments 4-7, wherein the diesel fuel composition exhibits at least two of the following characteristics: an initial boiling point of at least 215°F (102°C); a final boiling point of 800°F (427°C) or less; a T5 boiling point of at least 275°F (135°C); and a T95 boiling point of 775°F (418°C) or less.

### EXAMPLES

In these Examples, B100 (approximately 100% renewable components as the fuel composition) from various feeds were evaluated for metal uptake. In the following Examples, four feeds were chosen that represented the most relevant feedstocks currently in use commercially. A sample of neat biodiesel was evaluated comparatively, in order to identify the effects of metal uptake in biodiesel fuel components. Each of the neat biodiesel components and a petroleum-based ultra-low sulfur diesel (ULSD) sample were analyzed to determine acid number (according to ASTM D664 Procedure A) and to determine metals content using an inductively-coupled plasma (ICP) apparatus linked to an atomic emission spectroscopy (AES) apparatus (using Jarrell-Ash™ Model 1100 instrumentation), according to the following procedure.

After shaking each sample thoroughly, a ∼5-50 gram portion (depending on the oil density and expected metal concentrations) was weighed into a tared Vycor™ beaker (certain crude distillate samples may need to be heated to ∼150°C-175°C until completely fluid; necessary heating time depends on the sample boiling range and may take up to ∼2 hours). The oil was gently evaporated at moderate hot plate temperatures, which were raised as samples began to evaporate. If the sample self-ignited, it was let burn gently until only a charred residue was left. When the sample charred, it was let cool. Then ∼5 mL of concentrated sulfuric acid was added, and the hot plate was brought to dryness again. The temperature of hot plate was raised as necessary to fume off the sulfuric acid. If there was a lot of carbonaceous material left at this point, the sulfuric acid wash/evaporation step was repeated. The charred sample was transferred to a muffle furnace and heated to ∼530°C (±25°C) for at least 8 hours or overnight. Samples were then removed from the muffle furnace and let cool. About 1 mL of concentrated sulfuric acid and ∼3 mL of concentrated nitric acid were slowly added. The beaker was rinsed with ∼10-15 mL of distilled de-ionized water. About 3-5 drops of concentrated hydrofluoric acid was added, and the hot plate was brought to dryness again by slowly raising the temperature as necessary. After the samples were brought to dryness, they were returned to the muffle furnace for another ∼1 hour at ∼530°C (±25°C). The residue was then cooled, and ∼5 mL of concentrated hydrochloric acid was added. The beaker was rinsed with -30 mL of distilled de-ionized water. The beaker was covered with a watch glass and placed on hot plate on a medium setting. Residues were refluxed until dissolved (usually ∼1-3 hours). They were then cooled and transferred to a ∼50-mL volumetric flask and diluted to volume with distilled de-ionized water. A NIST-traceable sample, such as NIST 1634A (Trace Elements in Residual Fuel Oil) was carried through the process as a control sample, as were one or more reagent blanks (to reflect the kinds and quantities of acids used in sample decomposition). Standards can include, but are not necessarily limited to, blank 10% (v/v) HCl and 10 µg/mL of Cu, Zn in 10% (v/v) HCl.

The biodiesel samples evaluated were soybean oil methyl ester (SME), rapeseed oil methyl ester (RME), tallow methyl ester (TME), and palm oil methyl ester (PME). The methyl esters were compared to a petroleum ULSD sample. After initial/basic characterization, each sample was placed into a beaker containing zinc and copper coupons. The samples were then placed on a stir plate and mixed for approximately 24 hours at roughly room temperature (∼20-25°C). After 24 hours, the samples were analyzed by ICP-AES for metals content, particularly to determine the amount of copper and zinc uptake during their short time in the presence of the metal coupons. In cases where zinc and/or copper content was tested "before mixing", it should be understood that the residual zinc and/or copper content of the esterified oil samples were measured before contact with the zinc and/or copper coupons (in an identical manner to the samples exposed for about 24 hours to, *i.e*., "after mixing" with, the coupons, namely by ICP-AES analysis).

### Example 1

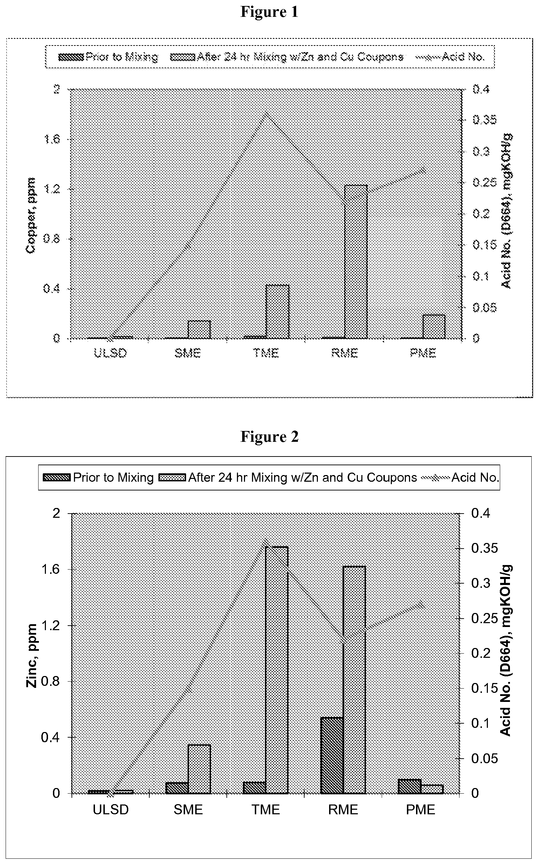

Four approximately pure (∼100%) methyl esters of renewable (vegetable and/or animal) oil samples were compared to a commercial grade ultra-low sulfur diesel (ULSD) fuel sample (alternately termed "Base") to determine copper and zinc uptake from the coupons. The ∼100% TME sample and the ∼100% RME sample, upon being exposed to the copper source for about 24 hours, were both found to solubilize more copper than either the ∼100% SME sample or the ∼100% PME sample. Similarly, the ∼100% TME sample and the ∼100% RME sample, upon being exposed to the zinc source for about 24 hours, were both found to solubilize more zinc than either the ∼100% SME sample or the ∼100% PME sample. Figures 1-2 show the results of zinc and copper uptake found in the samples before and after about 24 hours of mixing.

### Example 2

In Example 2, Example 1 was repeated, except that the zinc and copper coupons were specifically separated, so that the coupons did not contact each other in any of the samples and remained apart for the entirety of the experiment, whereas such specific coupon separation was not necessarily required in Example 1 (the coupons may or may not have been touching).

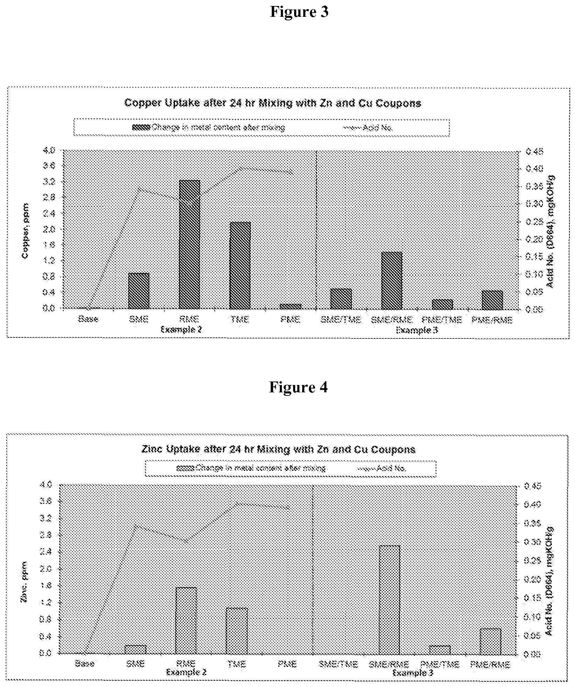

Table 1 shows the results of zinc and copper uptake found in the ∼100% single component ester samples before and after about 24 hours mixing, while the leftmost samples in Figures 3-4 show the delta in metal content after mixing. It appeared that the ∼100% RME sample and the ∼100% TME sample both showed higher affinities for zinc and copper uptake, in comparison to the ∼100% SME sample, the ∼100% PME sample, and the petroleum ULSD sample. Based on these results, further testing was done to determine a composition that might have an improved (*i.e*., reduced) metal uptake, compared to the ∼100% RME sample and the ∼100% TME sample, *e.g*., through blending biodiesel from various feeds.

### Example 3

Four blends were made containing 50/50 mixtures by volume of certain biodiesel feeds. Roughly equal parts of the pure SME feed was blended with an equal part of the pure TME feed to create the 50/50 v/v SME/TME blend, and roughly equal parts of the pure SME feed was blended with an equal part of the pure RME feed to create the 50/50 v/v SME/RME blend. Similarly, roughly equal parts of the pure PME feed was blended with an equal part of the pure TME feed to create the 50/50 v/v PME/TME blend, and roughly equal parts of the pure PME feed was blended with an equal part of the pure RME feed to create the 50/50 v/v PME/RME blend. The procedure employed in Example 2 was repeated on the 50/50 v/v blends to evaluate copper and zinc content before and after about 24 hours of mixing with the coupons. Table 1 below shows the results of the experiments in Example 3. The rightmost samples in Figures 3-4 show the delta in metal content after mixing.

**Table 1**

| **Component** | **Acid # ASTM D664** | **Copper (ppm) before mixing** | **Copper (ppm) after mixing** | **Zinc (ppm) before mixing** | **Zinc (ppm) after mixing** |
|---|---|---|---|---|---|
| base ULSD | <0.05 | 0.003 | 0.006 | 0.021 | 0.028 |
| SME | 0.34 | 0.01 | 0.89 | 0.068 | 0.27 |
| RME | 0.30 | 0.10 | 3.35 | 0.83 | 2.39 |
| TME | 0.40 | 0.015 | 2.21 | 0.076 | 1.16 |
| PME | 0.39 | 0.01 | 0.12 | 0.12 | 0.075 |
| SME/RME | -- | 0.055 | 1.49 | 0.16 | 2.73 |
| SME/TME | -- | 0.023 | 0.53 | 0.075 | 0.049 |
| PME/RME | -- | 0.050 | 0.53 | 0.17 | 0.78 |
| PME/TME | -- | 0.018 | 0.26 | 0.081 | 0.28 |

With addition of -50 vol% of SME, the copper uptake of the RME and TME feeds appeared to decrease by ∼56% and ∼77%, respectively. Additionally, the resulting 50/50 v/v SME/TME blend appeared to show no increase in zinc uptake (indeed a small decrease from the "before mixing" levels, which may or may not be significant).

The pure RME and TME feeds, after about 24 hours exposure to the coupon, appeared to have a zinc content greater than ∼1 ppm, a concentration known to cause injector deposits. With addition of SME to TME, the level of zinc appeared to decrease to a level at or below ∼1 ppm, which would minimize (or at least reduce) the possibility of injector deposits, if used as a B100 fuel. The zinc uptake also appeared to increase with addition of SME to RME. The reason for this latter result is not well understood at this time.

With addition of -50 vol% PME, the copper uptake of the RME and TME feeds appeared to decrease by ∼85% and ∼89%, respectively. Also with addition of ∼50 vol% PME, the zinc uptake of both the RME and TME feeds appeared to decrease ∼60% and ∼81%, respectively. As previously mentioned, zinc levels were elevated above ∼1 ppm in both the pure RME and pure TME biodiesel component samples. With addition of PME to either RME or TME, the copper and zinc levels appeared to decrease to a level below the ∼1 ppm threshold, which again would minimize (or at least reduce) the possibility of injector deposits, if used as a B100 fuel.

These results appear to show that certain biodiesel blends can be used to improve (reduce) metal uptake of individual biodiesel components. The acid number results seem to indicate that there is not necessarily a correlation between total acid content of the biodiesel components and their viability in attaining acceptably low copper and/or zinc metal content/uptake.

Notably, though, there seemed to be a synergistically low zinc and copper uptake (after 24 hours mixing) in the blends containing the TME feed, as compared to what would be expected based on volume (or weight) percentage of the relevant feeds. Though TME feeds are known to have relatively high metals content/uptake, it appears that blends containing even significant amounts of TME (*e.g*., from about 35 vol% to about 90 vol% TME) can still attain unexpectedly low copper and/or zinc uptake, when blended with a smaller than expected proportion of another renewable feed, such as SME and/or PME.

## Claims

1. Use of at least one of soybean oil methyl ester (SME) feed and palm oil methyl ester (PME) feed for reducing the uptake of zinc and copper metals in a renewable component of a distillate boiling range fuel composition comprising:
providing the renewable component comprising blending a tallow C1-C4 alkyl ester feed and from 5 to 65 vol% of soybean oil methyl ester (SME) feed and/or from 5 to 65 vol% of palm oil methyl ester (PME) feed, such that the tallow C1-C4 alkyl ester feed comprises from 35 vol% to 90 vol% of the renewable component.

2. The use of claim 1, wherein the renewable component comprises from 25 vol% to 60 vol%, preferably from 40 vol% to 60 vol% of soybean oil methyl ester (SME).

3. The use of any one of the previous claims, wherein the renewable component comprises from 25 vol% to 60 vol%, preferably from 40 vol% to 60 vol% of palm oil methyl ester (PME).

4. The use of any one of the previous claims, wherein the renewable component comprises from 40 vol% to 75 vol%, preferably from 40 vol% to 60 vol% of tallow methyl ester (TME).

5. The use of any one of the previous claims, further comprising blending from 5 vol% to 25 vol% of the renewable component with from 60 vol% to 95 vol% of a diesel boiling range non-renewable component to attain a diesel fuel composition with acceptably low copper and/or zinc metal uptake characteristics.

6. The use of any one of claims 1-4, further comprising blending from 45 vol% to 85 vol% of the renewable component with from 15 vol% to 55 vol% of a diesel boiling range non-renewable component to attain a diesel fuel composition with acceptably low copper and/or zinc metal uptake characteristics.

7. The use of claim 5 or claim 6, wherein the diesel boiling range component exhibits at least two of the following characteristics:
an initial boiling point of at least 102°C (215°F);
a final boiling point of 427°C (800°F) or less;
a T5 boiling point of at least 135°C (275°F); and
a T95 boiling point of 418°C (775°F) or less.

8. The use of any one of claims 5-7, wherein the diesel boiling range component has boiling range from 233°C (451°F) to 427°C (800°F).

9. The use of any one of claims 5-8, wherein the diesel fuel composition exhibits at least two of the following characteristics:
an initial boiling point of at least 102°C (215°F);
a final boiling point of 427°C (800°F) or less;
a T5 boiling point of at least 135°C (275°F); and
a T95 boiling point of 418°C (775°F) or less.

## Patentansprüche

1. Verwendung von mindestens einem von Sojabohnenölmethylester (SEM)-Einsatzmaterial und Palmölmethylester (PME)-Einsatzmaterial zur Verringerung der Aufnahme von Zink- und Kupfermetallen in einen erneuerbaren Bestandteil einer Kraftstoffzusammensetzung aus dem Destillatsiedebereich, wobei das Bereitstellen des erneuerbaren Bestandteils umfasst, dass ein Talg-C₁-C₄-Alkylester-Einsatzmaterial und 5 bis 65 Vol.-% Sojabohnenölmethylester (SEM)-Einsatzmaterial und/oder 5 bis 65 Vol.-% Palmölmethylester (PME)-Einsatzmaterial vermischt werden, sodass das Talg-C₁-C₄-Alkylester-Einsatzmaterial 35 Vol.-% bis 90 Vol.-% des erneuerbaren Bestandteils ausmacht.

2. Verwendung nach Anspruch 1, wobei der erneuerbare Bestandteil 25 Vol.-% bis 60 Vol.-%, bevorzugt 40 Vol.-% bis 60 Vol.-% Sojabohnenölmethylester (SME) enthält.

3. Verwendung nach einem der vorhergehenden Ansprüche, wobei der erneuerbare Bestandteil 25 Vol.-% bis 60 Vol.-%, bevorzugt 40 Vol.-% bis 60 Vol.-% Palmölmethylester (PME) enthält.

4. Verwendung nach einem der vorhergehenden Ansprüche, wobei der erneuerbare Bestandteil 40 Vol.-% bis 75 Vol.-%, bevorzugt 40 Vol.-% bis 60 Vol.-% Talgmethylester (TME) enthält.

5. Verwendung nach einem der vorhergehenden Ansprüche, die ferner umfasst, dass 5 Vol.-% bis 25 Vol.-% des erneuerbaren Bestandteils mit 60 Vol.-% bis 95 Vol.-% eines nicht erneuerbaren Bestandteils aus dem Dieselsiedebereich vermischt werden, um eine Dieselkraftstoffzusammensetzung mit annehmbar niedrigen Kupfer- und/oder Zinkmetall-Aufnahmeeigenschaften zu erlangen.

6. Verwendung nach einem der Ansprüche 1 bis 4, die ferner umfasst, dass 45 Vol.-% bis 85 Vol.-% des erneuerbaren Bestandteils mit 15 Vol.-% bis 55 Vol.-% eines nicht erneuerbaren Bestandteils aus dem Dieselsiedebereich vermischt werden, um eine Dieselkraftstoffzusammensetzung mit annehmbar niedrigen Kupfer- und/oder Zinkmetall-Aufnahmeeigenschaften zu erlangen.

7. Verwendung nach Anspruch 5 oder 6, wobei der Bestandteil aus dem Dieselsiedebereich mindestens zwei der folgenden Eigenschaften aufweist:
einen Anfangssiedepunkt von mindestens 102 °C (215 °F),
einen Endsiedepunkt von 427 °C (800 °F) oder weniger,
einen T5-Siedepunkt von mindestens 135 °C (275 °F) und
einen T95-Siedepunkt von 418 °C (775 °F) oder weniger.

8. Verwendung nach einem der Ansprüche 5 bis 7, wobei der Bestandteil aus dem Dieselsiedebereich einen Siedebereich von 233 °C (451 °F) bis 427 °C (800 °F) aufweist.

9. Verwendung nach einem der Ansprüche 5 bis 8, wobei der Bestandteil aus dem Dieselsiedebereich mindestens zwei der folgenden Eigenschaften aufweist:
einen Anfangssiedepunkt von mindestens 102 °C (215 °F),
einen Endsiedepunkt von 427 °C (800 °F) oder weniger,
einen T5-Siedepunkt von mindestens 135 °C (275 °F) und
einen T95-Siedepunkt von 418 °C (775 °F) oder weniger.

## Revendications

1. Utilisation d'au moins une parmi une alimentation en méthylester d'huile de soja (SME) et une alimentation en méthylester d'huile de palme (PME) afin de réduire l'absorption en métaux de zinc et de cuivre dans un composant renouvelable d'une composition de combustible dans la gamme d'ébullition des distillats, comprenant :
la fourniture du composant renouvelable comprenant le mélange d'une alimentation en C₁-C₄-alkylester de suif et de 5 à 65% vol. d'alimentation en méthylester d'huile de soja (SME) et/ou de 5 à 65% vol. d'alimentation en méthylester d'huile de palme (PME), de sorte que l'alimentation en C₁-C₄-alkylester de suif comprenne de 35% vol. à 90% vol. du composant renouvelable.

2. Utilisation selon la revendication 1, dans laquelle le composant renouvelable comprend de 25% vol. à 60% vol., préférablement de 40% vol. à 60% vol., du méthylester d'huile de soja (SME).

3. Utilisation selon l'une quelconque des revendications précédentes, dans laquelle le composant renouvelable comprend de 25% vol. à 60% vol., préférablement de 40% vol. à 60% vol., du méthylester d'huile de palme (PME).

4. Utilisation selon l'une quelconque des revendications précédentes, dans laquelle le composant renouvelable comprend de 40% vol. à 75% vol., préférablement de 40% vol. à 60% vol., de méthylester de suif (TME).

5. Utilisation selon l'une quelconque des revendications précédentes, comprenant en outre le mélange de 5% vol. à 25% vol. du composant renouvelable avec de 60% vol. à 95% vol. d'un composant non renouvelable dans la gamme d'ébullition du diesel, afin d'obtenir une composition de combustible diesel ayant des caractéristiques d'absorption de métaux de cuivre et/ou de zinc convenablement basses.

6. Utilisation selon l'une quelconque des revendications 1-4, comprenant en outre le mélange de 45% vol. à 85% vol. du composant renouvelable avec de 15% vol. à 55% vol. d'un composant non renouvelable dans la gamme d'ébullition du diesel, afin d'obtenir une composition de combustible diesel ayant des caractéristiques d'absorption de métaux de cuivre et/ou de zinc convenablement basses.

7. Utilisation selon la revendication 5 ou la revendication 6, dans laquelle le composant dans la gamme d'ébullition du diesel présente au moins deux parmi les caractéristiques suivantes :
un point d'ébullition initial d'au moins 102°C (215°F) ;
un point d'ébullition final de 427°C (800°F) ou moins ;
un point d'ébullition T5 d'au moins 135°C (275°F) ; et
un point d'ébullition T95 de 418°C (775°F) ou moins.

8. Utilisation selon l'une quelconque des revendications 5-7, dans laquelle le composant dans la gamme d'ébullition du diesel présente une gamme d'ébullition allant de 233°C (451°F) à 427°C (800°F).

9. Utilisation selon l'une quelconque des revendications 5-8, dans laquelle la composition de combustible diesel présente au moins deux parmi les caractéristiques suivantes :
un point d'ébullition initial d'au moins 102°C (215°F) ;
un point d'ébullition final de 427°C (800°F) ou moins ;
un point d'ébullition T5 d'au moins 135°C (275°F) ; et
un point d'ébullition T95 de 418°C (775°F) ou moins.
